# EUROPEAN PATENT APPLICATION

(11) **EP 4 123 811 A1**
(43) Date of publication of application: **25.01.2023**
(21) Application number: 21772046.5
(22) Date of filing: 09.03.2021
(51) Int. Cl.: H01M 50/289, H01G 11/10, H01G 11/78, H01M 50/209, H01M 50/242, H01M 50/244, H01M 50/572, H01M 50/588, H01M 50/593

(54) **POWER STORAGE DEVICE**

(30) Priority: 18.03.2020 JP 2020048226
(71) Applicant: GS Yuasa International Ltd., Kisshoin, Minami-ku, Kyoto-shi, Kyoto 601-8520 (JP)
(72) Inventor: SASAKI, Shun, Kyoto-shi, Kyoto 601-8520 (JP); IWASHIMA, Yasuyuki, Kyoto-shi, Kyoto 601-8520 (JP)
(74) Representative: Grünecker Patent- und Rechtsanwälte PartG mbB
(86) International application number: PCT/JP2021/009157
(87) International publication number: WO 2021/187219

(57) **Abstract**

An energy storage apparatus (10) includes an energy storage device (210), a spacer (301) disposed adjacent to the energy storage device (210), and an outer case (100) which accommodates the energy storage device (210) and the spacer (301). The spacer (301) includes a projecting portion (310) which projects from a bottom surface (211a) of the energy storage device (210). An inner surface (113) of the outer case (100) which faces a bottom surface (211a) of the energy storage device (210) is provided with an accommodating portion (111) which accommodates the projecting portion (310), and a placement surface portion (113a) which is disposed adjacent to the accommodating portion (111) in an arrangement direction of the spacer (301) and the energy storage device (210) and on which the bottom surface (211a) of the energy storage device (210) is placed.

## Description

### TECHNICAL FIELD

The present invention relates to an energy storage apparatus including an energy storage device and a spacer disposed adjacent to the energy storage device.

### BACKGROUND ART

Conventionally, there has been known an energy storage apparatus including an energy storage device and a spacer disposed adjacent to the energy storage device. Patent Document 1 discloses an assembled battery including a plurality of battery cells each having a metal case. In this assembled battery, the plurality of battery cells are stacked with a separator of an insulating material interposed therebetween. The separator has an insulating plate portion that insulates adjacent battery cells from each other, and a peripheral wall provided on a peripheral portion of the insulating plate portion. A bottom peripheral wall of the peripheral wall which is disposed on a bottom surface side of the battery cell has a convex part which projects downward. According to Patent Document 1, it is described that a more preferable insulation state is realized since the convex part is disposed so that the battery cell is separated from a plate such as a bottom plate or a cooling plate of a case disposed below the assembled battery.

### PRIOR ART DOCUMENT

### PATENT DOCUMENT

Patent Document 1: JP-A-2012-119156

### SUMMARY OF THE INVENTION

### PROBLEMS TO BE SOLVED BY THE INVENTION

As an energy storage apparatus, a structure capable of improving safety by improving fixability and electric insulation of an energy storage device is required.

An object of the present invention is to provide an energy storage apparatus with improved safety.

### MEANS FOR SOLVING THE PROBLEMS

An energy storage apparatus according to one aspect of the present invention includes: an energy storage device; a spacer disposed adjacent to the energy storage device; and an outer case which accommodates the energy storage device and the spacer, in which the spacer includes a projecting portion which projects from a bottom surface of the energy storage device, and an inner surface of the outer case which faces the bottom surface of the energy storage device is provided with an accommodating portion which accommodates the projecting portion, and a placement surface portion which is disposed adjacent to the accommodating portion in an arrangement direction of the spacer and the energy storage device and on which the bottom surface of the energy storage device is placed.

### ADVANTAGES OF THE INVENTION

According to the energy storage apparatus of the present invention, the safety can be improved.

### BRIEF DESCRIPTION OF THE DRAWINGS

Fig. 1 is a perspective view showing an external appearance of an energy storage apparatus according to an embodiment.
Fig. 2 is an exploded perspective view of the energy storage apparatus according to the embodiment.
Fig. 3 is an exploded perspective view of an energy storage unit according to the embodiment.
Fig. 4 is a cut view showing a part of an internal configuration of an outer case according to the embodiment.
Fig. 5Ais a perspective view showing an external appearance of a spacer according to the embodiment.
Fig. 5B is a perspective view showing an external appearance of a spacer according to the embodiment.
Fig. 6 is a perspective view showing an external appearance of an inner surface of the outer case according to the embodiment.
Fig. 7Ais a first cross-sectional view of the inner surface of the outer case according to the embodiment.
Fig. 7B is a second cross-sectional view of the inner surface of the outer case according to the embodiment.

### MODE FOR CARRYING OUT THE INVENTION

When the spacer has the convex part which projects downward as in the separator (spacer) in the conventional assembled battery (energy storage apparatus), the presence of the convex part becomes an obstacle for fixing the bottom surface of the energy storage device to a bottom wall of an outer case, and it becomes difficult to fix the energy storage device to the outer case. This is not preferable from the viewpoint of safety of the energy storage apparatus. Therefore, it is conceivable to remove the convex part (projecting portion) which projects downward and is provided in the lower portion of the spacer. However, since such a projecting portion is also related to reliability of electric insulation between two members adjacent to each other with the spacer interposed therebetween, it is not preferable to simply remove the projecting portion from the viewpoint of safety of the energy storage apparatus.

An object of the present invention is to provide an energy storage apparatus with improved safety.

An energy storage apparatus according to one aspect of the present invention includes: an energy storage device; a spacer disposed adjacent to the energy storage device; and an outer case which accommodates the energy storage device and the spacer, in which the spacer includes a projecting portion which projects from a bottom surface of the energy storage device, and an inner surface of the outer case which faces the bottom surface of the energy storage device is provided with an accommodating portion which accommodates the projecting portion, and a placement surface portion which is disposed adjacent to the accommodating portion in an arrangement direction of the spacer and the energy storage device and on which the bottom surface of the energy storage device is placed.

With such a configuration, the energy storage device and another member (another energy storage device or the like) disposed adjacent to the energy storage device can be insulated from each other by the spacer, and a creepage distance between the bottom surface of the energy storage device and the another member can be increased by providing the projecting portion. Therefore, the safety is improved. Since the projecting portion is accommodated in the accommodating portion, the projecting portion is accommodated in an aspect in which the projecting portion does not become an obstacle in the inside of the outer case. Accordingly, the bottom surface of the energy storage device can be directly or indirectly placed on and adhered to the placement surface portion, for example, and by providing a groove in the inner surface, the accommodating portion can be configured by the groove. That is, the energy storage apparatus with improved safety can be obtained with a simple configuration. By fixing the energy storage device to the placement surface portion by adhesion or the like, it is also possible to improve vibration resistance or impact resistance of the energy storage apparatus, and this also contributes to safety of the energy storage apparatus. As described above, according to the energy storage apparatus of the present aspect, the safety can be improved.

The projecting portion may include a restricting portion which is brought into contact with the bottom surface of the energy storage device, the restricting portion restricting a position of the bottom surface.

In this case, when the spacer includes the projecting portion which projects from the bottom surface of the energy storage device, the spacer cannot be usually positioned by a method of aligning the lower end of the spacer with the position of the bottom surface of the energy storage device. However, in the spacer according to the present aspect, since the projecting portion includes the restricting portion, the bottom surface of the energy storage device can be brought into contact with the restricting portion to easily position the spacer with respect to the energy storage device. As a result, the effect of increasing the creepage distance by the projecting portion can be reliably obtained.

The accommodating portion may include a first accommodating portion which accommodates a portion of the projecting portion, the portion including the restricting portion, and a second accommodating portion which accommodates a portion of the projecting portion, the portion not including the restricting portion.

According to this configuration, in a top view, the portion of the projecting portion where the restricting portion that is a wide portion is present can be accommodated in the first accommodating portion having a wide width, and a narrow portion without the restricting portion can be accommodated in the second accommodating portion having a narrow width. That is, in a top view, since the projecting portion having irregularities by including the restricting portion can be accommodated in the accommodating portion having a shape corresponding to the irregularities. Therefore, rattling of the projecting portion is suppressed, whereby the stability of the position of the spacer is improved. As a result, the electric insulation performance of the spacer is maintained, and the position restriction of the energy storage device by the spacer is reliably performed.

The projecting portion may extend along a peripheral edge portion of the bottom surface of the energy storage device, and the accommodating portion may extend along the projecting portion on the inner surface of the outer case.

With such a configuration, the projecting portion is provided in a range where the bottom surface of the energy storage device extends, and the entire region of the projecting portion can be accommodated in the accommodating portion. With such a configuration, it is possible to increase a creepage distance between the bottom surface of the energy storage device and another member disposed on an opposite side with the spacer interposed therebetween in a wide range. This contributes to further improvement of safety.

Hereinafter, an energy storage apparatus according to an embodiment of the present invention (including modification examples thereof) will be described with reference to the drawings. The embodiment described below describes a comprehensive or specific example. The numerical values, shapes, materials, components, positions for arranging the components and connection forms of the components, manufacturing processes, the order of the manufacturing processes, and the like described in the following embodiment are merely examples, and are not intended to limit the present invention. In each drawing, dimensions and the like are not strictly shown.

In the following description and drawings, an arrangement direction of a pair of (positive electrode side and negative electrode side) electrode terminals in one energy storage device, a facing direction of short side surfaces of a case of the energy storage device, or an arrangement direction of a pair of side plates is defined as an X-axis direction. An arrangement direction of a plurality of energy storage devices, a facing direction of long side surfaces of the case of the energy storage device, or an arrangement direction of a pair of end plates is defined as a Y-axis direction. An arrangement direction of an outer case body and a lid body of the energy storage apparatus, an arrangement direction of a case body and a lid portion of the energy storage device, an arrangement direction of the energy storage device and a bus bar, or a vertical direction is defined as a Z-axis direction. The X-axis direction, the Y-axis direction, and the Z-axis direction are directions intersecting (orthogonal in the present embodiment) each other. Although it is considered that the Z-axis direction may not be the vertical direction depending on the usage mode, the Z-axis direction will be described below as the vertical direction for convenience of description.

In the following description, the X-axis positive direction indicates an arrow direction of the X axis, and the X-axis negative direction indicates a direction opposite to the X-axis positive direction. The same applies to the Y-axis direction and the Z-axis direction. Expressions indicating relative directions or postures, such as parallel and orthogonal include cases of being not strictly the directions or postures. Two directions being orthogonal to each other not only means that the two directions are completely orthogonal to each other, but also means that the two directions are substantially orthogonal to each other, that is, a difference of about several percent is allowed.

### (Embodiment)

### [1. General description of energy storage apparatus]

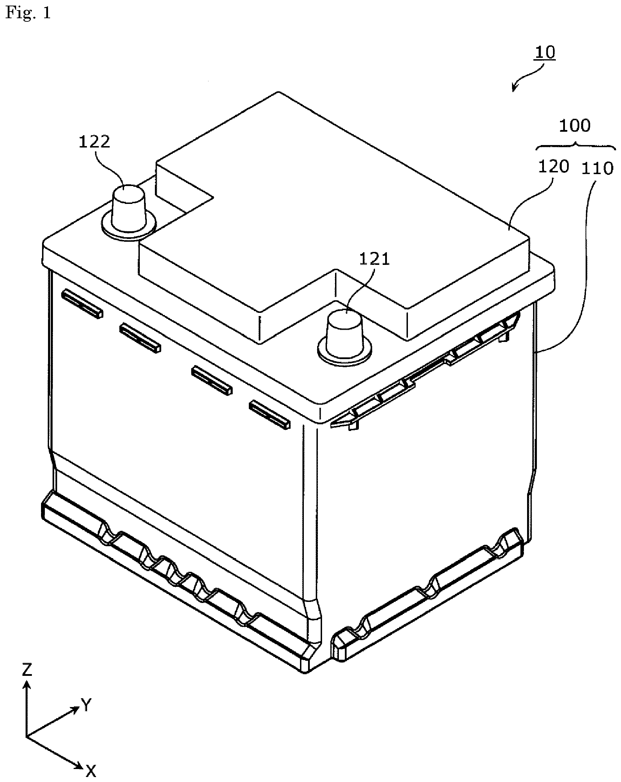

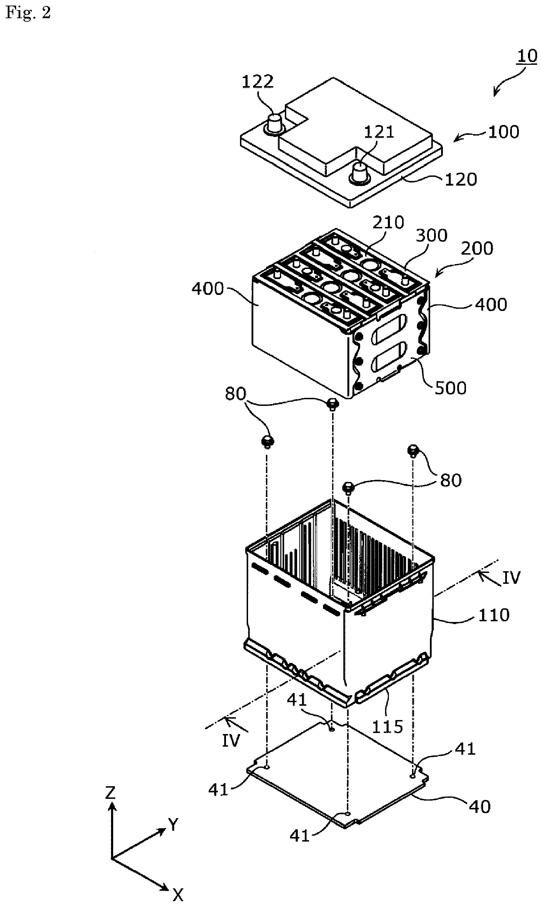

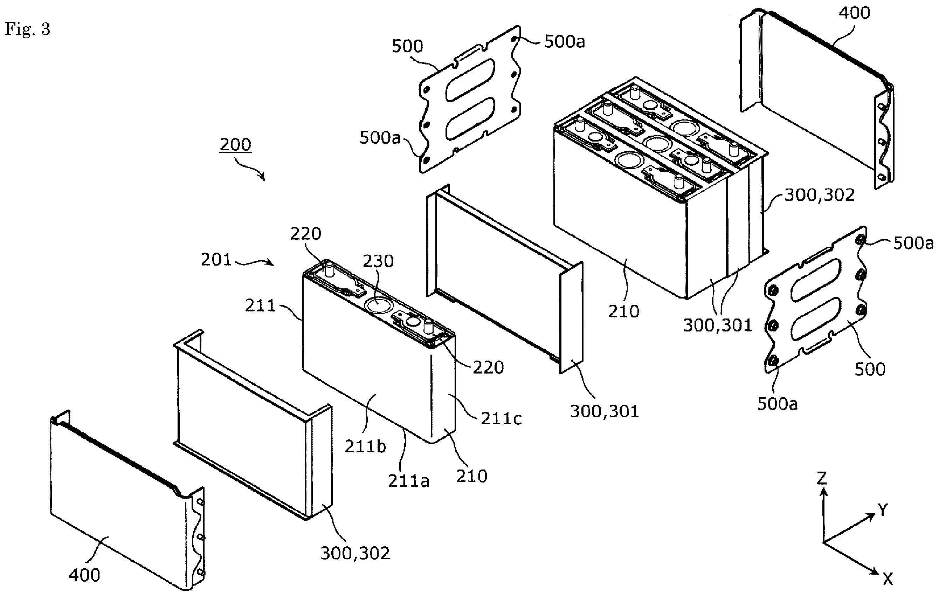

First, general description of an energy storage apparatus 10 according to the present embodiment will be made. Fig. 1 is a perspective view showing an external appearance of the energy storage apparatus 10 according to the embodiment. Fig. 2 is an exploded perspective view of the energy storage apparatus 10 according to the embodiment. Fig. 3 is an exploded perspective view of an energy storage unit 200 according to the embodiment.

The energy storage apparatus 10 is an apparatus capable of charging electricity from the outside and discharging electricity to the outside, and has a substantially rectangular parallelepiped shape in the present embodiment. The energy storage apparatus 10 is a battery module (assembled battery) used for power storage application, power supply application, or the like. Specifically, the energy storage apparatus 10 is used as a battery or the like for driving or starting an engine of a moving body such as an automobile, a motorcycle, a watercraft, a ship, a snowmobile, an agricultural machine, a construction machine, or a railway vehicle for an electric railway. Examples of the automobile include an electric vehicle (EV), a hybrid electric vehicle (HEV), a plug-in hybrid electric vehicle (PHEV), and a gasoline vehicle. Examples of the railway vehicle for an electric railway include a train, a monorail, and a linear motor car. The energy storage apparatus 10 can also be used as a stationary battery or the like used for home use, a generator, or the like.

As shown in Fig. 1, the energy storage apparatus 10 includes an outer case 100. As shown in Fig. 2 and Fig. 3, the energy storage unit 200 having an energy storage device array 201 including a plurality of energy storage devices 210 is disposed in the inside of the outer case 100. In addition to the above-mentioned components, the energy storage apparatus 10 may include a bus bar frame on which a bus bar is placed, a circuit board for monitoring a charged state and a discharged state of the energy storage devices 210, electric devices such as a fuse, a relay, and a connector, and an exhaust portion for exhausting a gas discharged from the energy storage devices 210 outward from the outer case 100.

The energy storage unit 200 includes the energy storage device array 201 in which the plurality of energy storage devices 210 are arranged, a plurality of spacers 300 (301 and 302), a pair of end plates 400, and a pair of side plates 500. The plurality of energy storage devices 210 are connected in series by a plurality of bus bars (not shown).

The outer case 100 is a case (module case) having a box shape (substantially rectangular parallelepiped shape) which forms an outer case of the energy storage apparatus 10. That is, the outer case 100 fixes the energy storage unit 200 and the like at a predetermined position and protects the energy storage unit 200 from an impact or the like. The outer case 100 is formed of an insulating member such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), an ABS resin, or a composite material thereof, or an insulation-coated metal. With such a configuration, the outer case 100 prevents the energy storage devices 210 and the like from coming into contact with an external metal member or the like. The outer case 100 may be formed of a conductive member such as metal as long as the electric insulation of the energy storage devices 210 and the like is maintained.

The outer case 100 includes an outer case body 110 which forms a body of the outer case 100 and an outer case lid body 120 which forms a lid body of the outer case 100. The outer case body 110 is a bottomed rectangular cylindrical housing (casing) in which an opening is formed, and accommodates the energy storage devices 210 and the like therein. The outer case lid body 120 is a flat rectangular member which closes the opening of the outer case body 110. The outer case lid body 120 is joined to the outer case body 110 by an adhesive, heat sealing, ultrasonic welding, or the like. The outer case lid body 120 is provided with a positive electrode external terminal 121 and a negative electrode external terminal 122. The positive electrode external terminal 121 is electrically connected to an electrode terminal 220 which is a total positive terminal of the energy storage unit 200. The negative electrode external terminal 122 is electrically connected to an electrode terminal 220 which is a total negative terminal of the energy storage unit 200. The energy storage apparatus 10 charges electricity from the outside and discharges electricity to the outside through the positive electrode external terminal 121 and the negative electrode external terminal 122.

The energy storage device 210 is a secondary battery (battery cell) capable of charging and discharging electricity, and more specifically, is a nonaqueous electrolyte secondary battery such as a lithium ion secondary battery. The energy storage device 210 has a flat rectangular parallelepiped shape (prismatic shape), and in the present embodiment, four energy storage devices 210 are arranged side by side in the Y-axis direction. The size and shape of the energy storage devices 210 and the number of the arranged energy storage devices 210 are not limited, and only one energy storage device 210 may be arranged. The energy storage device 210 is not limited to the nonaqueous electrolyte secondary battery, and may be a secondary battery other than the nonaqueous electrolyte secondary battery, or may be a capacitor. The energy storage device 210 may be not a secondary battery but a primary battery that can use stored electricity unless being charged by a user.

The energy storage device 210 according to the present embodiment includes a case 211 and the pair of (positive electrode side and negative electrode side) electrode terminals 220 (see Fig. 3). An electrode assembly, a pair of current collectors, an electrolyte solution (nonaqueous electrolyte), and the like are accommodated in the case 211, and a gasket is disposed between the case 211 and the electrode terminal 220 and the current collector, but these are not shown. A type of the electrolyte solution is not particularly limited as long as performance of the energy storage device 210 is not impaired, and various types of electrolyte solutions can be selected. In addition to the above-mentioned configuration, the energy storage device 210 may include a spacer disposed on a side or the like of the current collector, an insulating sheet which covers an outer surface of the case 211, and the like.

The case 211 is a case having a rectangular parallelepiped shape (prismatic shape) including a container body in which an opening is formed and a lid portion that closes the opening of the case body, and is formed of metal such as stainless steel, aluminum, an aluminum alloy, iron, or a plated steel plate. In the present embodiment, as shown in Fig. 3, the case 211 is disposed in a posture in which long side surfaces 211b face the Y-axis direction and short side surfaces 211c face the X-axis direction, that is, a posture in which the pair of long side surfaces 211b face each other in the Y-axis direction and the pair of short side surfaces 211c face each other in the X-axis direction. The surface (lid portion) of the case 211 on the Z-axis positive direction side is provided with a gas release valve 230 that releases the pressure when the pressure in the case 211 increases (see Fig. 3). That is, in the case 211, the gas release valve 230 is disposed at a position facing a bottom surface 211a which is a surface of the case 211 on the Z-axis negative direction side.

The electrode terminal 220 is a terminal (positive electrode terminal or negative electrode terminal) of the energy storage device 210 disposed on the surface (lid portion) of the case 211 on the Z-axis positive direction side, and is electrically connected to a positive electrode plate or a negative electrode plate of the electrode assembly via the current collector. That is, each of the pair of electrode terminals 220 is a metal member for leading out electricity stored in the electrode assembly to a space outward from the energy storage device 210 and for introducing electricity into a space inside the energy storage device 210 so as to store electricity in the electrode assembly. The electrode terminals 220 are formed of aluminum, an aluminum alloy, copper, a copper alloy, or the like.

The electrode assembly is an energy storage element (power generating element) formed by stacking the positive electrode plate, the negative electrode plate, and a separator. The positive electrode plate is obtained by forming a positive active material layer on a positive electrode substrate layer which is a current collecting foil made of metal such as aluminum or an aluminum alloy. The negative electrode plate is obtained by forming a negative active material layer on a negative electrode substrate layer which is a current collecting foil made of metal such as copper or a copper alloy. As the active material used for the positive active material layer and the negative active material layer, a known material can be appropriately used as long as it can occlude and release lithium ions. The electrode assembly may be an electrode assembly in any form such as a winding-type electrode assembly formed by winding plates (a positive electrode plate and a negative electrode plate), a stacking-type (a stackedtype) electrode assembly formed by stacking a plurality of plate-shaped plates, or a bellows-type electrode assembly formed by folding plates in a bellows shape.

The current collector is a conductive member (a positive electrode current collector or a negative electrode current collector) electrically connected to the electrode terminal 220 and the electrode assembly. The positive electrode current collector is formed of aluminum, an aluminum alloy, or the like similarly to the positive electrode substrate layer of the positive electrode plate, and the negative electrode current collector is formed of copper, a copper alloy, or the like similarly to the negative electrode substrate layer of the negative electrode plate.

The spacer 300 (spacer 301, 302) is a rectangular plate-like member which is disposed on a side (the Y-axis positive direction or the Y-axis negative direction) of the energy storage device 210 and electrically insulates the energy storage device 210 from another member. To be more specific, the spacer 301 is a member which is disposed between two energy storage devices 210 adjacent to each other and electrically insulates the two energy storage devices 210 from each other, and is a member called an intercell spacer. The spacer 302 is a member called an end spacer, and is a member which is disposed between the energy storage device 210 at the end portion and the end plate 400 and electrically insulates the energy storage device 210 at the end portion and the end plate 400 from each other. Each of the spacers 301 and 302 is disposed so as to cover both sides (short side surface 211c sides) of the energy storage device 210 in the X-axis direction, and electrically insulates the energy storage device 210 from the side plates 500.

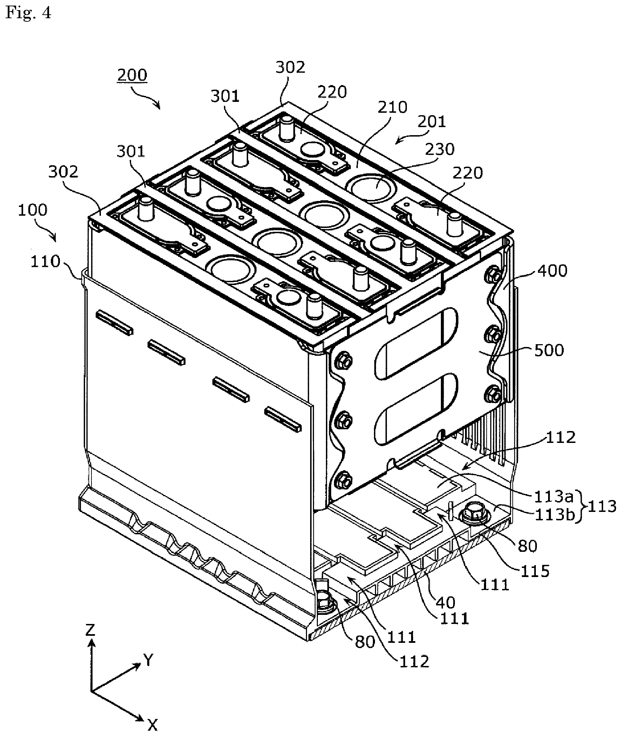

In the present embodiment, the three spacers 301 and the two spacers 302 are arranged corresponding to the four energy storage devices 210, but when the number of the energy storage devices 210 is other than four, the number of the spacers 301 is also appropriately changed according to the number of the energy storage devices 210. The spacer 300 is formed of any electrically insulating resin material or the like that can be used for the outer case 100. In the present embodiment, the spacer 300 has a portion which projects downward from the bottom surface of the energy storage device 210 located on the side. With such a configuration, an electric insulation between two energy storage devices 210 adjacent to each other with the spacer 300 interposed therebetween or between the energy storage device 210 and the end plate 400 is enhanced. Details of the spacer 300 will be described later with reference to Figs. 4 to 7B.

The end plates 400 and the side plates 500 are binding members which press (bind) the energy storage device array 201 from the outside in the arrangement direction (Y-axis direction) of the energy storage devices 210 in the energy storage device array 201. That is, the pair of end plates 400 sandwich the energy storage device array 201 from both sides in the arrangement direction, and the pair of side plates 500 apply a binding force to the pair of end plates 400. With such a configuration, the respective energy storage devices 210 included in the energy storage device array 201 are pressed (bound) from both sides in the arrangement direction.

In the present embodiment, the side plate 500 is connected (joined) to the end plates 400 by a plurality of nuts 500a arranged in the Z-axis direction (see Fig. 3). Specifically, the nuts 500a are screwed with screw portions of the end plates 400 penetrating the side plate 500 and are fastened to the screw portions. The end plate 400 and the side plate 500 are formed of metal such as iron, stainless steel, or an aluminum alloy.

In the present embodiment, a reinforcing member 40 is disposed outward from the outer case 100. The reinforcing member 40 is a member formed of a material having high strength such as iron, and has a function of enhancing impact resistance and the like of the energy storage apparatus 10. In the present embodiment, as shown in Fig. 2, the reinforcing member 40 is disposed along a bottom wall 115 of the outer case 100, and the reinforcing member 40 is fixed to the outer case 100 by four bolts 80.

### [2. Structure of spacer and its periphery]

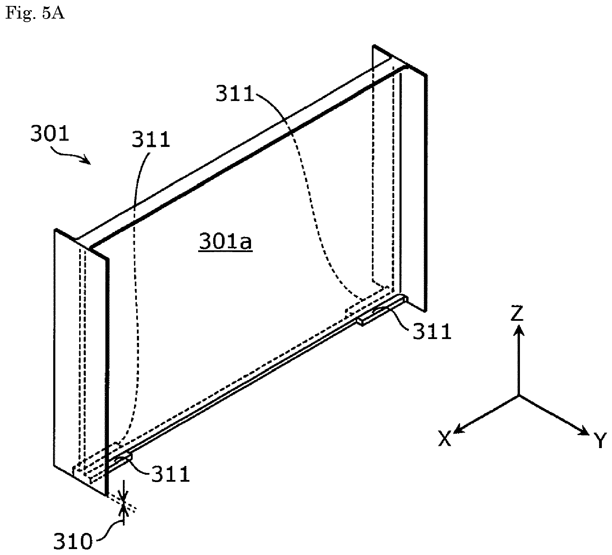

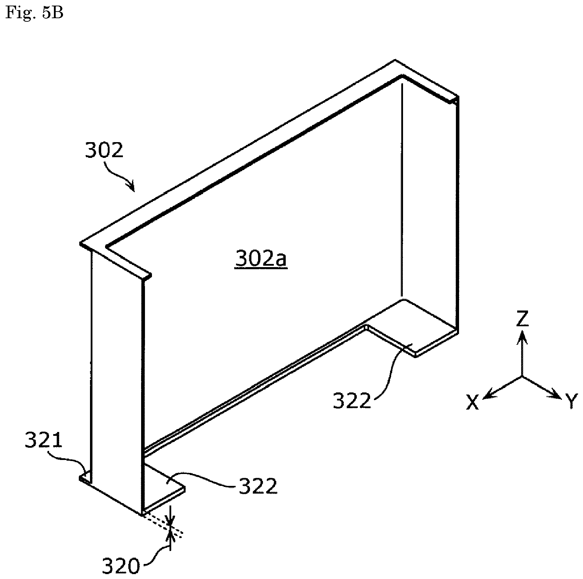

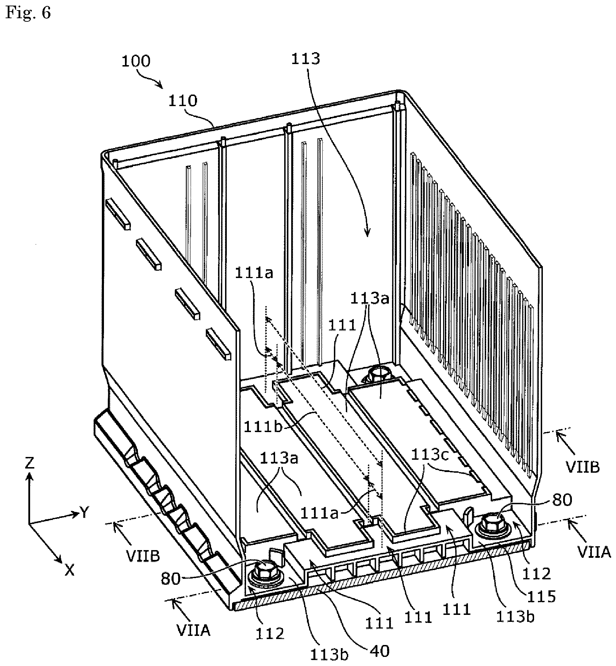

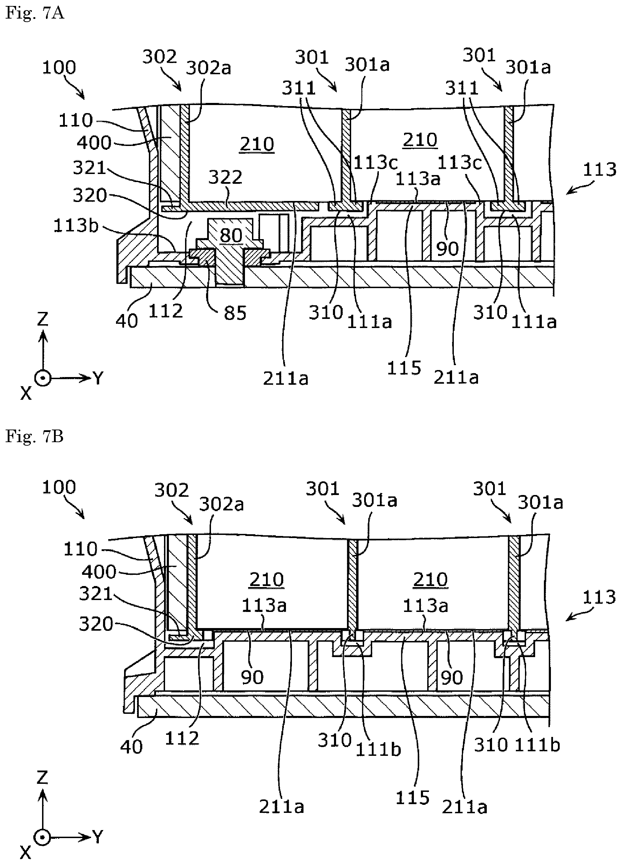

Next, the structure of the spacer 300 and its periphery will be described with reference to Figs. 4 to 7B. Fig. 4 is a cut view showing a part of an internal configuration of the outer case 100 according to the embodiment. Fig. 4 shows the outer case body 110 in a state where a part of the outer case body 110 is cut along a YZ plane parallel to a line IV-IV in Fig. 2 and the energy storage unit 200 is floated from the bottom wall 115 of the outer case body 110. Fig. 5Ais a perspective view showing an external appearance of the spacer 301 according to the embodiment, and Fig. 5B is a perspective view showing an external appearance of the spacer 302 according to the embodiment. Fig. 6 is a perspective view showing an external appearance of an inner surface 113 of the outer case 100 which faces the bottom surfaces 211a of the energy storage devices 210 according to the embodiment. Fig. 7Ais a first cross-sectional view of the inner surface 113 of the outer case 100 according to the embodiment, and Fig. 7B is a second cross-sectional view of the inner surface 113. Fig. 7A shows a part of a cross section of the energy storage apparatus 10 in a YZ plane passing through a line VIIA-VIIA of Fig. 6. Fig. 7B shows a part of a cross section of the energy storage apparatus 10 in a YZ plane passing through a line VIIB-VIIB of Fig. 6.

As shown in Fig. 4, the energy storage unit 200 is placed on the inner surface 113 facing the bottom surfaces 211a of the energy storage devices 210 in the inside of the outer case 100. The inner surface 113 is an inner surface (a surface of the outer case 100 on the inner side) of the bottom wall 115 of the outer case 100 (outer case body 110). To be more specific, the inner surface 113 has placement surface portions 113a on which the energy storage devices 210 are placed and fixing surface portions 113b formed with through holes through which the bolts 80 pass. The bolts 80 penetrate the through holes of the bottom wall 115 of the outer case 100 and are screwed into screw holes of the reinforcing member 40 to fix the reinforcing member 40 to the outer case 100.

In the present embodiment, the spacer 300 is disposed on the long side surface 211b (see Fig. 3) side of the energy storage device 210 included in the energy storage unit 200, and the spacer 300 has a projecting portion which projects downward from the bottom surface 211a of the energy storage device 210. To be more specific, as shown in Fig. 5A and Fig. 7A, the spacer 301 disposed between two energy storage devices 210 adjacent to each other has a spacer body 301a and a projecting portion 310 formed on a lower end portion of the spacer body 301a. As shown in Fig. 5B and Fig. 7A, the spacer 302 disposed between the energy storage device 210 and the end plate 400 has a spacer body 302a and a projecting portion 320 formed on a lower end portion of the spacer body 302a.

Since the spacer 301 has the projecting portion 310, a creepage distance between the bottom surfaces 211a of the two energy storage devices 210 adjacent to each other is increased at the lower end portion of the spacer body 301a as compared with a case where the spacer 301 does not have the projecting portion 310. That is, the electric insulation between the cases 211 of the two energy storage devices 210 adjacent to each other is improved. Since the spacer 302 has the projecting portion 320, a creepage distance between the energy storage device 210 and the end plate 400 is also increased. As a result, the electric insulation between the case 211 of the energy storage device 210 and the end plate 400 is improved.

However, while the effect of increasing the creepage distance can be obtained by the projecting portions 310 and 320, in the energy storage unit 200, the projecting portions 310 and 320 project downward from the plurality of bottom surfaces 211a arranged flush with each other in the Y-axis direction. That is, when the energy storage unit 200 is placed on a simple flat surface, the energy storage unit 200 is supported by the projecting portions 310 and 320, and it is difficult to stably support the energy storage unit 200 by the flat surface.

Therefore, in the present embodiment, accommodating portions are provided on the inner surface 113 of the outer case 100 so as to accommodate the projecting portions 310 and 320 disposed so as to project downward from the bottom surface 211a as described above. To be more specific, as shown in Fig. 6, Fig. 7A, and Fig. 7B, the inner surface 113 of the outer case 100 is provided with accommodating portions 111 which each accommodate the projecting portion 310 of the spacer 301 and accommodating portions 112 which each accommodate the projecting portion 320 of the spacer 302. With such a configuration, the bottom surface 211a of each of the plurality of energy storage devices 210 can be brought into contact with the inner surface 113 and hence, the energy storage unit 200 is stably supported on the inner surface 113 of the outer case 100. To be more specific, in the present embodiment, the bottom surface 211a of each of the plurality of energy storage devices 210 is adhered and fixed to the inner surface 113. More specifically, as shown in Fig. 7A and Fig. 7B, the placement surface portion 113a is disposed adjacent to the accommodating portion 111 in the arrangement direction of the spacer 301 and the energy storage device 210. By disposing an adhesive 90 between the placement surface portion 113a and the bottom surface 211a of the energy storage device 210, the bottom surface 211a of the energy storage device 210 is fixed to the placement surface portion 113a. With such a configuration, each of the plurality of energy storage devices 210 is firmly fixed to the outer case 100.

Each of the projecting portions 310 and 320 has a portion which restricts a position of the energy storage device 210. To be more specific, as shown in Fig. 5A and Fig. 7A, the projecting portion 310 of the spacer 301 has restricting portions 311 which are brought into contact with the bottom surfaces 211a of the energy storage devices 210 disposed adjacently to the spacer 301. That is, the projecting portion 310 has the restricting portions 311 on both sides in the Y-axis direction. As shown in Fig. 5B and Fig. 7A, the projecting portion 320 of the spacer 302 has restricting portions 322 which are brought into contact with the bottom surface 211a of the energy storage device 210 disposed adjacently to the spacer 302. As shown in Figs. 7A and 7B, the projecting portion 320 has a facing portion 321 disposed to face the end surface of the end plate 400 adjacent to the spacer 302.

In this manner, the projecting portion 310 has the restricting portions 311, and the projecting portion 320 has the restricting portions 322. With such a configuration, the two energy storage devices 210 adjacent to each other and the spacer 301 disposed between the two energy storage devices 210 can be easily positioned with respect to one another in the Z-axis direction. The energy storage device 210 at the end portion of the energy storage device array 201 and the spacer 302 adjacent to the energy storage device 210 can be easily positioned with respect to one another in the Z-axis direction. Since the projecting portion 310 has the restricting portions 311, a creepage distance between the cases 211 of the two energy storage devices 210 adjacent to each other with the spacer 301 having the projecting portion 310 interposed therebetween can be further increased. Since the projecting portion 320 has the restricting portions 322 and the facing portion 321, a creepage distance between the energy storage device 210 and the end plate 400 adjacent to each other with the spacer 302 having the projecting portion 320 interposed therebetween can be further increased.

As shown in Fig. 5A, the projecting portion 310 of the spacer 301 has the restricting portions 311 only at both end portions in the X-axis direction. With such a configuration, a wide range of the bottom surface 211a which is brought into contact with the restricting portion 311 can be used as an adhesion surface (fixing surface) which is adhered to the inner surface 113 (placement surface portion 113a) of the outer case 100. That is, in the present embodiment, the accommodating portion 111 which accommodates the projecting portion 310 is also formed to have a width corresponding to the presence or absence of the restricting portions 311. Specifically, as shown in Figs. 6, 7A, and 7B, the accommodating portion 111 includes first accommodating portions 111a which accommodate portions of the projecting portion 310 having the restricting portions 311 and a second accommodating portion 111b which accommodates a portion of the projecting portion 310 not having the restricting portions 311. On the bottom surface 211a of the energy storage device 210 disposed adjacently to the spacer 302, a portion which is brought into contact with the restricting portion 322 is not fixed to the placement surface portion 113a as shown in Fig. 7A. However, in the portion of the projecting portion 320 where the restricting portion 322 is not formed, the bottom surface 211a of the energy storage device 210 disposed adjacently to the spacer 302 can be fixed to the placement surface portion 113a by the adhesive 90 as shown in Fig. 7B. Accordingly, out of the four energy storage devices 210 included in the energy storage device array 201, the energy storage devices 210 at both ends can be fixed to the placement surface portions 113a of the inner surface 113 of the outer case 100 with the adhesives 90 although an adhesion area is small compared to the two energy storage devices 210 therebetween.

In the present embodiment, as shown in Fig. 6 and Fig. 7A, a placement surface rib 113c is provided on the placement surface portions 113a so as to surround an aggregate region of the four placement surface portions 113a divided by the three accommodating portions 111. This prevents the adhesives 90 before solidification from flowing out of the aggregate region of the four placement surface portions 113a. The placement surface rib 113c equalizes the height (width in the Z-axis direction) of the gap between the bottom surface 211a and the placement surface portion 113a in the aggregate region. Accordingly, the adhesive 90 can be more reliably disposed in a range of the bottom surface 211a of each of the plurality of energy storage devices 210 which faces the placement surface portion 113a. That is, the effectiveness of fixing the plurality of energy storage devices 210 using the adhesives 90 is improved.

### [3. Description of effects]

As described above, the energy storage apparatus 10 according to the embodiment of the present invention includes the energy storage devices 210, the outer case 100 which accommodates the energy storage devices 210, and the spacers 301 disposed adjacent to the energy storage devices 210. The spacer 301 includes the projecting portion 310 which projects downward from the bottom surface 211a of the energy storage device 210. The inner surface 113 of the outer case 100 is provided with the accommodating portions 111 which each accommodate the projecting portion 310, and the placement surface portions 113a each disposed adjacent to the accommodating portion 111 in the arrangement direction of the spacer 301 and the energy storage device 210 and on which the bottom surface 211a of the energy storage device 210 is placed. The same applies to the spacer 302, and the spacer 302 includes the projecting portion 320 which projects downward from the bottom surface 211a of the energy storage device 210. The inner surface 113 of the outer case 100 is provided with the accommodating portions 112 which each accommodate the projecting portion 320, and the placement surface portions 113a each disposed adjacent to the accommodating portion 112 in the arrangement direction of the spacer 302 and the energy storage device 210 and on which the bottom surface 211a of the energy storage device 210 is placed (see Fig. 7B).

With such a configuration, the energy storage device 210 and another member (the energy storage device 210 or the end plate 400) disposed adjacent to the energy storage device 210 can be insulated from each other by the spacer 301 or 302. By disposing the projecting portion 310 or 320, a creepage distance between the bottom surface 211a of the energy storage device 210 and the another member can be increased. Therefore, the safety of the energy storage apparatus 10 is improved. Since the projecting portions 310 and 320 are accommodated in the accommodating portions 111 and 112, the projecting portions 310 and 320 are accommodated in an aspect in which the projecting portions 310 and 320 do not become an obstacle in the inside of the outer case 100. Accordingly, the bottom surface 211a of the energy storage device 210 can be directly or indirectly placed on and adhered to the placement surface portion 113a, for example. As shown in Fig. 6, by providing grooves in the inner surface 113, the accommodating portions 111 and 112 can be configured by the grooves. That is, the energy storage apparatus 10 with improved safety can be obtained with a simple configuration. By fixing the energy storage device 210 to the placement surface portion 113a with the adhesive 90, it is also possible to improve vibration resistance or impact resistance of the energy storage apparatus 10, and this also contributes to safety of the energy storage apparatus 10. As described above, according to the energy storage apparatus 10 of the present embodiment, the safety can be improved.

In the present embodiment, the projecting portion 310 has the restricting portions 311 which are each brought into contact with the bottom surface 211a of the energy storage device 210 to restrict the position of the bottom surface 211a. The projecting portion 320 also includes the restricting portions 322 which are brought into contact with the bottom surface 211a of the energy storage device 210, the restricting portion restricting the position of the bottom surface 211a.

In general, when the spacer includes a projecting portion which projects from the bottom surface 211a of the energy storage device 210, the spacer cannot be positioned by a method of aligning the lower end of the spacer with the position of the bottom surface 211a of the energy storage device 210. However, in the spacer 301 according to the present aspect, since the projecting portion 310 includes the restricting portions 311, the bottom surface 211a of the energy storage device 210 can be brought into contact with the restricting portions 311 to easily position the spacer 301 with respect to the energy storage device 210. As a result, the effect of increasing the creepage distance by the projecting portion 310 can be reliably obtained. The same applies to the spacer 302, and when the restricting portions 322 position the energy storage device 210 disposed adjacently to the spacer 302, the effect of increasing the creepage distance by the projecting portion 320 can be reliably obtained.

In the present embodiment, the accommodating portion 111 includes the first accommodating portions 111a which accommodate a portion of the projecting portion 310, the portions including the restricting portions 311 and the second accommodating portion 111b which accommodates a portion of the projecting portion 310, the portion not including the restricting portions 311.

In the present embodiment, as shown in Fig. 6, in a top plan view (as viewed in the Z-axis positive direction), portions of the projecting portion 310 where the restricting portions 311 that are wide portions are present are accommodated in the first accommodating portions 111a having a wide width. In the projecting portion 310, a narrow portion without the restricting portions 311 is accommodated in the second accommodating portion 111b having a narrow width. That is, in a top view, since the projecting portion 310 having irregularities by including the restricting portions 311 can be accommodated in the accommodating portion 111 having a shape corresponding to the irregularities. Therefore, rattling of the projecting portion 310 is suppressed, whereby the stability of the position of the spacer 301 is improved. As a result, the electric insulation performance of the spacer 301 is maintained, and the position restriction of the energy storage device 210 by the spacer 301 is reliably performed. The area of the placement surface portion 113a located adjacent to the accommodating portion 111 can be increased as compared with a case where the width of the accommodating portion 111 in the Y-axis direction is constant (the same width as the first accommodating portion 111a) in the extending direction (X-axis direction) of the accommodating portion 111. With such a configuration, an adhesion area between the bottom surface 211a of the energy storage device 210 and the placement surface portion 113a is increased, and as a result, a fixing force of the energy storage device 210 to the placement surface portion 113a is enhanced.

In the present embodiment, the projecting portion 310 extends along the peripheral edge portion of the bottom surface 211a of the energy storage device 210, and the accommodating portion 111 extends along the projecting portion 310 on the inner surface 113 of the outer case 100. To be more specific, the projecting portion 310 is linearly provided along a part of the peripheral edge portion of the bottom surface 211a of the energy storage device 210 disposed adjacently to the spacer 301. The accommodating portion 111 is formed linearly along the projecting portion 310 on the inner surface 113 of the outer case 100. The same applies to the projecting portion 320, and the projecting portion 320 is provided linearly along a part of the peripheral edge portion of the bottom surface 211a of the energy storage device 210 adjacent to the spacer 302. The accommodating portion 112 is formed linearly along the projecting portion 320 on the inner surface 113 of the outer case 100.

With such a configuration, the projecting portion 310 or 320 is provided in a range where the bottom surface 211a of the energy storage device 210 extends, and the entire region of the projecting portion 310 or 320 can be accommodated in the accommodating portion 111 or 112. With such a configuration, it is possible to increase a creepage distance between the bottom surface 211a of the energy storage device 210 and another member (the energy storage device 210 or the end plate 400) disposed on an opposite side with the spacer 301 or 302 interposed therebetween in a wide range. This contributes to further improvement of safety.

### [4. Description of modification examples]

Although the energy storage apparatus 10 according to the present embodiment has been described above, the present invention is not limited to the above-mentioned embodiment. That is, the embodiment disclosed herein is illustrative in all respects and is not restrictive, and the scope of the present invention is defined by the claims, and includes all modifications within the meaning and scope equivalent to the claims.

A member other than the end plate 400 may be disposed outward from the spacer 302 located at the end portion of the energy storage device array 201. A case in which an electric device such as a control board or a relay is accommodated may be disposed outward from the spacer 302. Even in this case, when the case is made of metal, or when a metal terminal or the like is exposed from the case, there is a case where electric insulation is ensured between the case and the energy storage device 210 which is close to the case in distance. In this case, by disposing the spacer 302 having the projecting portion 320 between the case and the energy storage device 210, a creepage distance between the case and the energy storage device 210 at least on a lower end side of the spacer 302 increases. With such a configuration, the safety of the energy storage apparatus 10 can be enhanced.

It is not essential that the bottom surface 211a of the energy storage device 210 and the inner surface 113 of the outer case 100 are adhered to each other by the adhesive 90. When the energy storage unit 200 can be fixed at a predetermined position in the inside of the outer case 100 by another member such as an inner lid or a bus bar frame disposed above the energy storage unit 200, the bottom surface 211a of the energy storage device 210 and the inner surface 113 may not be adhered to each other.

In Figs. 7A and 7B, the adhesive 90 is disposed only between the bottom surface 211a of the energy storage device 210 and the placement surface portion 113a, but the adhesive 90 may be disposed between the projecting portion 310 and the accommodating portion 111. The same applies to the projecting portion 320, and the adhesive 90 may be disposed between the projecting portion 320 and the accommodating portion 112. With such a configuration, a fixing force of the entire energy storage unit 200 with respect to the inner surface 113 of the outer case 100 can be enhanced.

The placement surface portion 113a may directly support the bottom surface 211a of the energy storage device 210 by a surface when the placement surface rib 113c is not provided. The placement surface portion 113a may support the bottom surface 211a of the energy storage device 210 via the adhesive 90, an insulating film, or the like regardless of the presence or absence of the placement surface rib 113c. In either case, it can be said that the bottom surface 211a of the energy storage device 210 is substantially placed on the placement surface portion 113a.

The spacer 301 may not have the projecting portion 310 in the entire region in the X-axis direction at the lower end portion of the spacer body 301a. A plurality of projecting portions 310 may be provided at the lower end portion of the spacer body 301a so as to be separated from each other in the X-axis direction. Even in this case, the effect of increasing the creepage distance can be obtained in the existence range of each of the plurality of projecting portions 310. The projecting portion 310 is preferably disposed at the lower end portion of the spacer body 301a in the entire region of the existence range of the energy storage device 210 in the X-axis direction. That is, the projecting portion 310 is disposed at the lower portion of the energy storage device 210 on the long side surface 211b side without fail and hence, reliability of electric insulation between the cases 211 of the energy storage devices 210 adjacent to each other can be enhanced.

It is not essential that the projecting portion 310 has the restricting portions 311. That is, since the spacer 301 has the projecting portion 310 which projects downward from the bottom surfaces 211a of the two energy storage devices 210 adjacent to each other with the spacer 301 interposed therebetween, it is possible to obtain the effect of increasing the creepage distance between the two energy storage devices 210 by the projecting portion 310. When the restricting portions 311 are provided on the projecting portion 310 without changing the projecting length of the projecting portion 310, not only the projecting portion 310 can restrict the position of the energy storage device 210 but also an effect of further extending the creepage distance can be obtained.

As a material for forming the spacer 300, a material having an electric insulation property other than resin may be adopted. The spacer 300 may be formed of an inorganic material such as mica or glass fiber, or may be formed of a material containing both resin and those materials other than the resin. The spacer 300 may be formed by coating a surface of a metal substrate with an insulating resin. That is, the spacer 300 only needs to have an insulation property that does not conduct between the plurality of members in contact with the spacer 300, and the material thereof may be appropriately determined according to required rigidity, durability, heat resistance, flame retardancy, weight, or the like.

The energy storage unit 200 may not include the binding members (the end plates 400 and the side plates 500). When the energy storage device array 201 including the plurality of energy storage devices 210 can be bound from both sides in the arrangement direction by the outer case 100, the energy storage unit 200 may not include the binding members.

A form constructed by freely combining the components included in the above-mentioned embodiment and the modification examples thereof is also included in the scope of the present invention.

### INDUSTRIAL APPLICABILITY

The present invention can be applied to an energy storage apparatus or the like including the energy storage device 210 such as a lithium ion secondary battery.

### DESCRIPTION OF REFERENCE SIGNS

10: energy storage apparatus
90: adhesive
100: outer case
110: outer case body
111: accommodating portion
111a: first accommodating portion
111b: second accommodating portion
112: accommodating portion
113: inner surface
113a: placement surface portion
113b: fixing surface portion
113c: placement surface rib
115: bottom wall
210: energy storage device
211: case
211a: bottom surface
211b: long side surface
211c: short side surface
300, 301, 302: spacer
301a, 302a: spacer body
310, 320: projecting portion
311, 322: restricting portion

## Claims

1. An energy storage apparatus, comprising:
an energy storage device;
a spacer disposed adjacent to the energy storage device; and
an outer case which accommodates the energy storage device and the spacer, wherein
the spacer includes a projecting portion which projects from a bottom surface of the energy storage device, and
an inner surface of the outer case which faces the bottom surface of the energy storage device is provided with an accommodating portion which accommodates the projecting portion, and a placement surface portion which is disposed adjacent to the accommodating portion in an arrangement direction of the spacer and the energy storage device and on which the bottom surface of the energy storage device is placed.

2. The energy storage apparatus according to claim 1, wherein the projecting portion includes a restricting portion which is brought into contact with the bottom surface of the energy storage device, the restricting portion restricting a position of the bottom surface.

3. The energy storage apparatus according to claim 2, wherein the accommodating portion includes;
a first accommodating portion which accommodates a portion of the projecting portion, the portion including the restricting portion, and
a second accommodating portion which accommodates a portion of the projecting portion, the portion not including the restricting portion.

4. The energy storage apparatus according to any one of claims 1 to 3, wherein
the projecting portion extends along a peripheral edge portion of the bottom surface of the energy storage device, and
the accommodating portion extends along the projecting portion on the inner surface of the outer case.
